# EUROPEAN PATENT APPLICATION

(11) **EP 4 826 669 A1**
(43) Date of publication of application: **21.10.2026**
(21) Application number: 24903483.6
(22) Date of filing: 25.11.2024
(51) Int. Cl.: G06V 10/54, G06T 1/00, G07D 7/00

(54) **PROGRAM, INFORMATION PROCESSING METHOD, AND INFORMATION PROCESSING SYSTEM**

(30) Priority: 13.12.2023 JP 2023209760
(71) Applicant: Sony Semiconductor Solutions Corporation, Atsugi-shi, Kanagawa 243-0014 (JP)
(72) Inventor: SAKUMOTO, Koichi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/041661
(87) International publication number: WO 2025/126824

(57) **Abstract**

The present disclosure relates to a program, an information processing method, and an information processing system capable of appropriately determining whether printed characters and photographs are true objects printed by using a reversible thermosensitive recording medium, by using an image obtained by capturing a card face. Adaptive filter processing is performed on a captured image obtained by capturing a surface of printed matter at a predetermined resolution or higher, and normalization is performed by using variation of surrounding pixels after subtracting from an original image, and, in this manner, texture information is extracted, frequency analysis is performed on the texture information, a ratio of a principal angle at which a frequency is detected, with respect to a sum at all angles is obtained as a score based on a frequency analysis result, and authenticity determination is made by comparison with a predetermined threshold value. The present disclosure can be applied to authenticity determination of an ID card printed by using a reversible thermosensitive recording medium.

## Description

### Technical Field

The present disclosure relates to a program, an information processing method, and an information processing system, and more particularly, to a program, an information processing method, and an information processing system capable of appropriately realizing authenticity determination of printed matter printed using a reversible thermosensitive recording medium.

### Background Art

Techniques related to counterfeiting prevention countermeasures for identification documents such as passports and identification (ID) cards play an important role in terms of prevention of counterfeiting and imitation itself and authenticity determination of counterfeit products.

There are various counterfeiting prevention countermeasure techniques such as IC chip embedding, hologram, special ink that emits light by ultraviolet irradiation, and minute character printing that has difficulty in reproduction by a copier.

In addition to these counterfeiting prevention countermeasure techniques, there is an authenticity determination technique for determining authenticity by using an image obtained by capturing a card face with a camera of a smartphone or the like, and this technique can be used not only for personal identification in a face-to-face manner but also for online personal identification performed in a financial institution such as an Internet bank.

As an authenticity determination technique using an image obtained by capturing the card face of an ID card, a technique has been proposed in which printing is performed to form concentric colored pattern on the card face of the ID card, and the authenticity of the ID card is determined based on whether the concentric colored pattern appears in an image obtained by capturing the card face of the ID card with a smartphone or the like (see PTL 1).

However, according to the technique of PTL 1, simple counterfeit products such as tampering of attaching low-resolution printed matter to an ID card can be detected, but if an imitated pattern is directly printed on a card by a high-definition printer, an ID card containing concentric colored pattern can be created, and thus there is a possibility that it is not possible to appropriately determine the authenticity.

Therefore, as a countermeasure against counterfeit products or hand-made sophisticated counterfeit products using an inkjet printing machine or the like, a reversible thermosensitive recording medium in which information such as a name and a face photograph is printed on a plastic substrate with a laser has been developed (see PTL 2).

Since it is not possible to easily change characters and photographs printed by using the reversible thermosensitive recording medium, counterfeit resistance is high, and it is suitable for applications to passports and ID cards.

### Citation List

### Patent Literature

PTL 1: JP 2023-130031 A
PTL 2: WO 2023/176942

### Summary

### Technical Problem

However, in a case where the characters and photographs printed by using the reversible thermosensitive recording medium in PTL 2 have high counterfeit resistance, but it is not possible to appropriately determine whether the printed characters and photographs are true objects printed by the reversible thermosensitive recording medium, there is a concern that forgery objects printed by means other than printing using the reversible thermosensitive recording medium are regarded as true objects and wrongly used. Similarly, in practice, there is a concern that a true object printed by using a reversible thermosensitive recording medium is regarded as a forgery object and appropriate use of this object is hindered.

The present disclosure has been made in view of such a circumstance, and in particular, enables appropriate determination as to whether a printed character or photograph is a true object printed by using a reversible thermosensitive recording medium or a forgery object printed by another method, by using an image obtained by capturing a card face on which the character, the photograph, or the like is printed.

### Solution to Problem

A program and an information processing system according to an aspect of the present disclosure are a program for causing a computer to function as an image processing unit that extracts texture information from a captured image of a surface of printed matter captured at a predetermined resolution or higher, and a determination unit that determines whether the printed matter is printed by a predetermined printing method based on the texture information, and an information processing system including the image processing unit and the determination unit.

An information processing method according to an aspect of the present disclosure includes image processing of extracting texture information from a captured image of a surface of printed matter captured at a predetermined resolution or higher, and determination processing of determining whether the printed matter is printed by a predetermined printing method based on the texture information.

In an aspect of the present disclosure, texture information is extracted from a captured image of a surface of printed matter captured at a predetermined resolution or higher, and whether the printed matter is printed by a predetermined printing method is determined based on the texture information.

### Brief Description of Drawings

[Fig. 1] Fig. 1 is a view illustrating an image example in which printed matter using a reversible thermosensitive recording medium and printed matter using an inkjet printer are each captured by a camera.
[Fig. 2] Fig. 2 is a view illustrating an example of printed matter using a reversible thermosensitive recording medium.
[Fig. 3] Fig. 3 is a view illustrating an example of an image obtained by capturing the printed matter in Fig. 2.
[Fig. 4] Fig. 4 is a view illustrating an example of a spatial frequency spectrum in Fig. 3.
[Fig. 5] Fig. 5 is a view illustrating an intensity ratio at a peak position in the image in Fig. 2.
[Fig. 6] Fig. 6 is a diagram illustrating a configuration example of an information processing apparatus in the present disclosure.
[Fig. 7] Fig. 7 is a view illustrating a series of processing results by the information processing apparatus in Fig. 6.
[Fig. 8] Fig. 8 is a view illustrating a principal angle.
[Fig. 9] Fig. 9 is a view illustrating mask processing.
[Fig. 10] Fig. 10 is a flowchart illustrating authenticity determination processing by the information processing apparatus in Fig. 6.
[Fig. 11] Fig. 11 is a flowchart illustrating preprocessing in Fig. 10.
[Fig. 12] Fig. 12 is a flowchart illustrating frequency information extraction processing in Fig. 10.
[Fig. 13] Fig. 13 is a flowchart illustrating score calculation processing in Fig. 10.
[Fig. 14] Fig. 14 is a view illustrating a first application example of the present disclosure.
[Fig. 15] Fig. 15 is a view illustrating a second application example of the present disclosure.
[Fig. 16] Fig. 16 is a diagram illustrating a configuration example of a general-purpose computer.

### Description of Embodiments

Preferred embodiments of the present disclosure will be described in detail below with reference to the accompanying drawings. Note that, in the present specification and the drawings, components having substantially the same functional configuration are denoted by the same reference numeral, and redundant description thereof will be omitted.

Hereinafter, embodiments for implementing the present technique will be described. The description will be made in the following order.
1. Overview of Present Disclosure
2. Preferred Embodiment
3. First Application Example
4. Second Application Example
5. Example of Execution Using Software

### 1. Overview of Present Disclosure

### Reversible Thermosensitive Recording Medium

In particular, the present disclosure enables appropriate determination as to whether a printed character or photograph is a true object printed by using a reversible thermosensitive recording medium or a forgery object printed by another method, by using an image obtained by capturing a card face on which the character, the photograph, or the like is printed. Therefore, in describing the outline of the present disclosure, first, a reversible thermosensitive recording medium and printing using the reversible thermosensitive recording medium will be described.

The reversible thermosensitive recording medium is, for example, a medium in which a plurality of reversible thermosensitive recording layers having different photothermal conversion wavelengths are laminated with a heat insulating layer interposed therebetween. The reversible thermosensitive recording medium has characteristics that a specific reversible thermosensitive recording layer selectively generates heat when pulse-irradiation with laser light having a predetermined wavelength is performed, and color development and decoloring can be caused by the action of the generated heat. By using such characteristics, information such as characters and photographs can be printed (recorded) on the reversible thermosensitive recording medium, and the printed (recorded) information can be erased.

In a printing technique using a reversible thermosensitive recording medium, a target object such as a character or a photograph is printed by performing pulse irradiation while scanning with laser light, and thus, for example, a unique texture having parallel lines arranged at equal intervals at about 50 to 150 µm appears on a part or the entirety of a printing surface. These characteristics can be understood as capturing the surface of the printing surface with a camera at predetermined magnification or higher.

Here, an indication of the "predetermined magnification or higher" is, for example, a resolution of 10 pixels/mm or more, that is, a resolution to the extent that a region of 10 mm square is allocated to an image region of 100 pixel square or more. In the case of an image having the number of pixels of 2000 pixel square, the magnification is magnification when a region of about 20 cm square or less is captured.

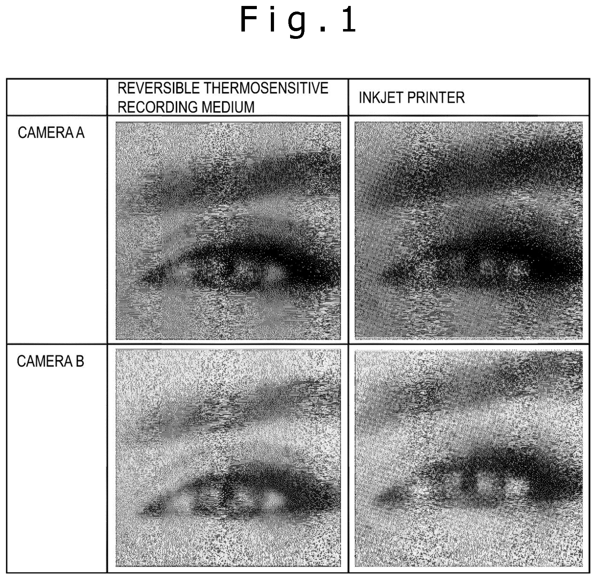

Fig. 1 is a comparison of images obtained by capturing a printing surface using a reversible thermosensitive recording medium and a printing surface using an inkjet printer by using camera functions of two general models of smartphones. In all the images, a printing surface including a photograph of the vicinity of the eyes of a person is captured.

Note that, in Fig. 1, the upper part in the figure is an image captured by a camera A, the lower part is an image captured by a camera B, the left part in the figure is an image obtained by capturing a printing surface using a reversible thermosensitive recording medium, and the right part in the figure is an image obtained by capturing a printing surface using an inkjet printer.

In both the cameras A and B, it can be observed that linear textures arranged at equal intervals in the horizontal direction appear on the printing surface using the reversible thermosensitive recording medium. On the other hand, it can be observed that a dot-like texture appears on the printing surface using the ink jet printer.

In the comparison in Fig. 1, it has been described that a linear texture qualitatively appears on the printing surface using the reversible thermosensitive recording medium, but in the following description, it will be quantitatively described that a linear texture appears on the printing surface using the reversible thermosensitive recording medium.

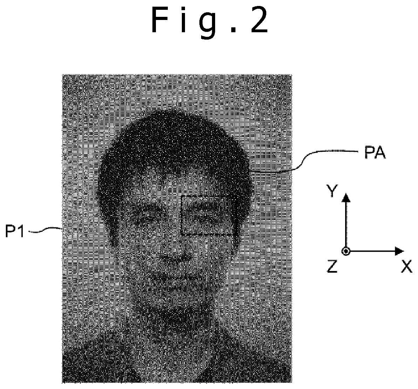

Fig. 2 illustrates an example of printed matter (drawn matter) P1 formed by irradiating a reversible thermosensitive recording medium with laser light Lm. On the surface of the printed matter P1, an image PA including a face image of a person, which has been formed by irradiation with the laser light Lm is visually recognized. The image PA is formed by continuous irradiation of a plurality of recording layers of the reversible thermosensitive recording medium with the laser light Lm in a scanning direction, and is formed at a position of a predetermined depth from the surface of the reversible thermosensitive recording medium.

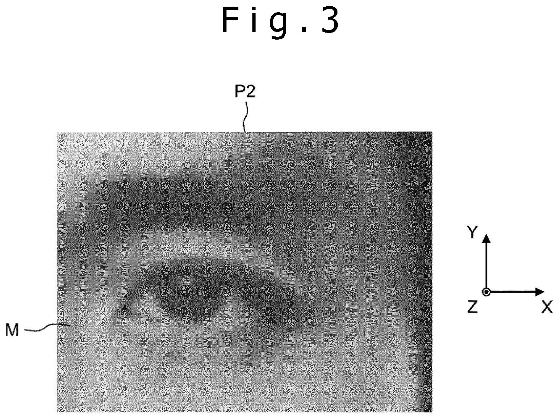

Fig. 3 illustrates an example of an image P2 obtained by capturing the printed matter (drawn matter) P1 (image PA). More specifically, the image P2 in Fig. 3 is an enlarged image obtained by capturing the inside of a rectangular dotted frame (vicinity of the lacrimal point) of the image P1. The image data P2 includes a stripe pattern M that is formed by irradiation with the laser light Lm and has an irregular width extending in an X direction.

Therefore, the image PA of the printed matter (drawn matter) P1 includes the stripe pattern M that is formed by irradiation with the laser light Lm and has an irregular width extending in the X direction. In other words, in a recording layer of the reversible thermosensitive recording medium, the stripe pattern M having an irregular width extending in the X direction is drawn as a drawing mark by continuous irradiation of the surface of the reversible thermosensitive recording medium with the laser light Lm in the scanning direction. At this time, the stripe pattern M is formed by overlapping color development parts of a plurality of recording layers.

Note that, in a case where the image PA is an image including a face of a person, the X direction (extending direction of the stripe pattern M) may be, for example, a direction parallel to a line segment linking both eyes included in the image. Furthermore, in a case where the image PA is an image including a face of a person, a Y direction (direction orthogonal to the extending direction of the stripe pattern M) may be, for example, a direction orthogonal to the line segment linking both the eyes included in the image. In this case, the reversible thermosensitive recording medium may have a square shape in plan view, or may have a shape (for example, a polygonal shape, a circular shape, an elliptical shape, or the like) different from the square shape in plan view.

The image P2 is obtained, for example, by capturing using ring illumination. In a case where an image is captured by using general illumination (for example, simultaneous radiation), it is difficult to read the stripe pattern M included in the image PA from image data due to light reflection on the surface of the reversible thermosensitive recording medium.

On the other hand, in a case where the ring illumination is used, the influence of light reflection on the surface of the reversible thermosensitive recording medium can be reduced, and it becomes relatively easy to read the stripe pattern M included in the image PA from the image data.

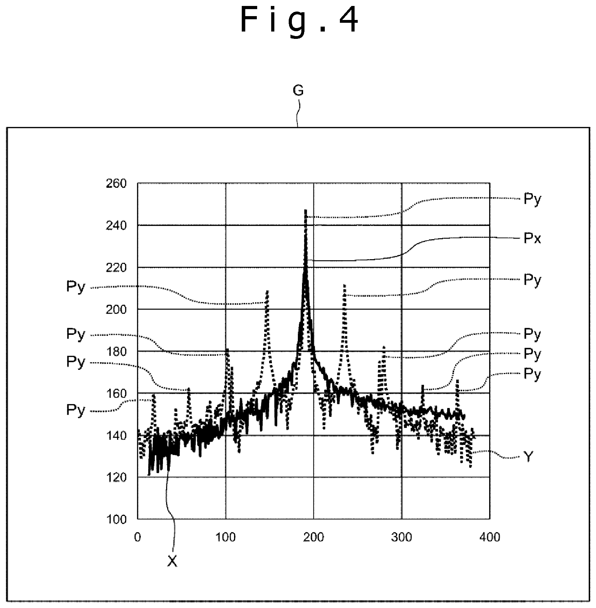

Fig. 4 illustrates an example of a spatial frequency spectrum of the image P2. In Fig. 4, a spatial frequency spectrum of the image P2 in the X direction, which has a solid waveform, and a spatial frequency spectrum of the image P2 in the Y direction, which has a dotted waveform, are superimposed on each other.

One large peak Px exists in the spatial frequency spectrum of the image P2 in the X direction. On the other hand, in the spatial frequency spectrum of the image P2 in the Y direction, a periodic peak Py that is not present in the spatial frequency spectrum of the image P2 in the X direction exists.

Therefore, in the spatial frequency spectrum of image data 21, the stripe pattern M is drawn on the recording layer of the reversible thermosensitive recording medium in a form in which the periodic peak Py that is not in a profile in the X direction exists in a profile in the Y direction orthogonal to the X direction.

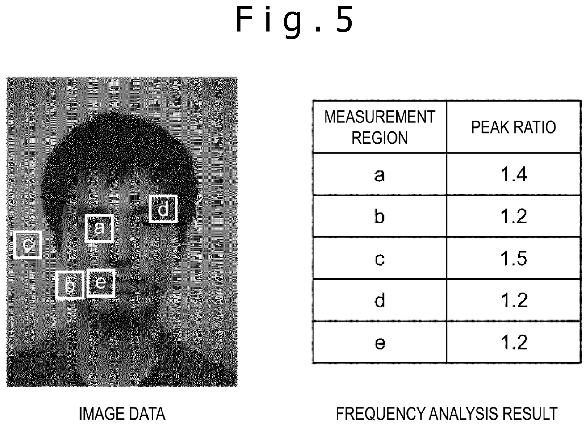

The left part of Fig. 5 illustrates an example of a measurement region designated in the image P2. In the left part of Fig. 5, the vicinity of the lacrimal point (measurement region a), the vicinity of a boundary of the cheek (measurement region b), a background where no person appears (measurement region c), the vicinity of an outer corner of the eye (measurement region d), and the vicinity of an edge of the lip (measurement region e) are illustrated as measurement regions.

The right part of Fig. 5 illustrates an example of a peak ratio in each measurement region. The peak ratio means an intensity ratio at a position of the peak Py when the spatial frequency spectrum in the X direction and the spatial frequency spectrum in the Y direction of the image data P2 are superimposed on each other.

From the right part of Fig. 5, it can be said that the stripe pattern M is drawn on the plurality of recording layers of the reversible thermosensitive recording medium in a form in which the intensity ratio satisfies the following formula.

$S 2 / S 1 \geq 1.2$
S1: Intensity at the position of the peak Py in the profile in the X direction
S2: Intensity at the position of the peak Py in the profile in the Y direction
S2/S1: the intensity ratio

It can be said that the image PA including the stripe pattern M having the quantitative characteristics as described above is printed on the reversible thermosensitive recording medium as the drawn matter P1.

Therefore, in the present disclosure, a card face on which characters, photographs, and the like are printed is captured, and it is determined whether the stripe pattern M is observed from the captured image.

As a result, if the stripe pattern M can be observed, it can be determined that the printed character or photograph is a true object recorded on the reversible thermosensitive recording medium, and conversely, if the stripe pattern M cannot be observed, it can be determined that the character or photograph is a forgery object printed by another method.

As a result, it is possible to appropriately realize authenticity determination for determining whether the printed characters and photographs are true objects recorded on the reversible thermosensitive recording medium by using an image obtained by capturing the characters, photographs, and the like printed on the card face.

### 2. Preferred Embodiment

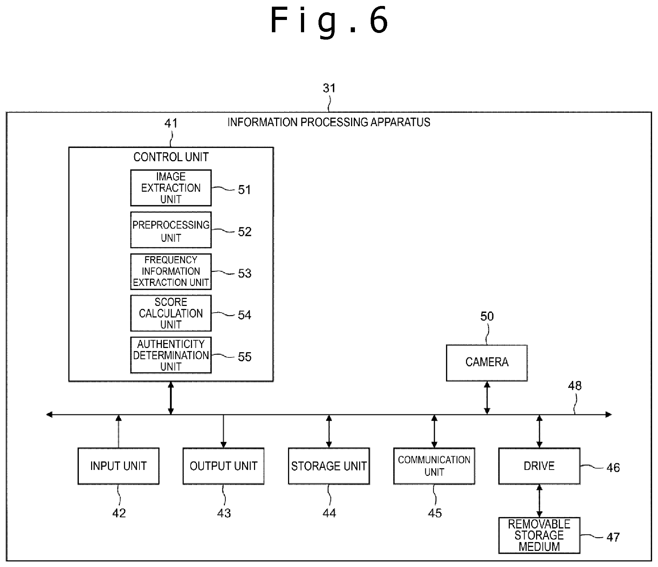

Next, with reference to the block diagram of Fig. 6, a configuration example of an information processing apparatus capable of appropriately realizing authenticity determination that is determination as to whether printed matter is a true object recorded on a reversible thermosensitive recording medium, from an image obtained by capturing the printed matter to which the technique of the present disclosure is applied will be described.

An information processing apparatus 31 in Fig. 6 has a configuration assuming a smartphone or a tablet terminal, and it is premised that at least a camera capable of capturing an image is mounted.

The information processing apparatus 31 includes a control unit 41, an input unit 42, an output unit 43, a storage unit 44, a communication unit 45, a drive 46, and a removable storage medium 47, and a camera 50, which are connected to each other via a bus 48 and can transmit and receive data and programs to and from each other.

The control unit 41 includes a processor and a memory, and controls the overall operation of the information processing apparatus 31. In addition, the control unit 41 includes an image extraction unit 51, a preprocessing unit 52, a frequency information extraction unit 53, a score calculation unit 54, and an authenticity determination unit 55.

The image extraction unit 51 extracts an image of a predetermined region as a determination target from an image as a target of authenticity determination, and outputs the extracted image to the preprocessing unit 52. For example, in a case where the image as the target of authenticity determination is a face photograph of a person or the like, the predetermined region to be extracted is, for example, a specific region such as a region around the eyes, a region around the nose, and a region around the lips. Furthermore, the image as the target of authenticity determination is not limited to the face photograph of a person, and may be a region where other characters or photographs are printed.

In order to adaptively adjust the sharpness, the preprocessing unit 52 performs filter processing by, for example, a low pass filter (LPF) including a Gaussian filter or the like on the original image supplied from the image extraction unit 51, obtains a difference image from the original image, and further performs normalization due to variation, thereby emphasizing texture corresponding to the above-described stripe pattern M and outputting the texture to the frequency information extraction unit 53.

The frequency information extraction unit 53 applies two-dimensional fast Fourier transformation (FFT) to an image in which texture is emphasized as a preprocessing result from the preprocessing unit 52, performs frequency analysis of the texture, and outputs a result of the frequency analysis to the score calculation unit 54.

The score calculation unit 54 calculates a score having a large value when the texture corresponding to the above-described stripe pattern M is observed, based on the result of the frequency analysis, and outputs the score to the authenticity determination unit 55.

The authenticity determination unit 55 determines whether an image as a target of authenticity determination is drawn matter printed by using a reversible thermosensitive recording medium, based on whether a score as a calculation result from the score calculation unit 54 is larger than a threshold value.

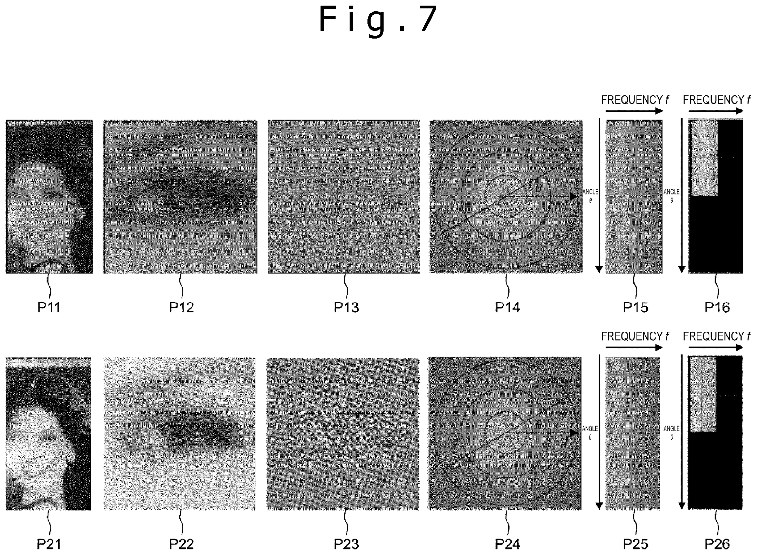

Note that an operation of each of the image extraction unit 51, the preprocessing unit 52, the frequency information extraction unit 53, the score calculation unit 54, and the authenticity determination unit 55 will be described later in detail together with description of processing with reference to Fig. 7.

The input unit 42 includes an input device such as a keyboard, a mouse, or a touch panel with which a user inputs an operation command, and supplies various input signals to the control unit 41.

The output unit 43, which is controlled by the control unit 41, includes a display section and a sound output unit. The output unit 43 outputs an operation screen or an image of a processing result to a display section including a display device including a liquid crystal display (LCD), an organic electro luminescence (EL), or the like, and displays the operation screen or the image. Furthermore, the output unit 43 controls a sound output unit including a sound output device to reproduce various sounds, music, sound effects, and the like.

The storage unit 44 is composed of a hard disk drive (HDD), a solid state drive (SSD), a semiconductor memory, or the like, and writes or reads various types of data and various programs under control of the control unit 41.

Under the control of the control unit 41, the communication unit 45 implements wired or wireless communication such as a local area network (LAN) and Bluetooth (tradename), and transmits and receives various data and programs between the communication unit 45 and various devices through a network as necessary.

The drive 46 reads and writes data from and to the removable storage medium 47, such as a magnetic disk (including a flexible disk), an optical disk (including a compact disc-read only memory (CD-ROM), and a digital versatile disc (DVD), a magneto-optical disk (including a mini disc (MD)), or a semiconductor memory.

The camera 50 has, for example, a resolution of 10 pixels/mm or more, that is, a resolution of a predetermined magnification or higher to the extent that a region of 10 mm square is allocated to an image region of 100 pixel square or more, and supplies a captured image to the control unit 41.

Each Configuration Realized by Information Processing Apparatus and Flow of Authenticity Determination Processing

Next, with reference to Fig. 7, in a case of using each of an image P11 obtained by capturing printed matter (drawn matter) printed by using a reversible thermosensitive recording medium and an image P21 obtained by capturing printed matter (drawn matter) printed by using an inkjet printer, a function realized by each configuration of the information processing apparatus 31 in Fig. 6 will be described together with a processing result realized by each function.

### Preprocessing

In order to determine whether printed matter is printed by using a reversible thermosensitive recording medium depending on whether the printed matter has a unique texture based on an image obtained by capturing the surface of the printed matter, it is necessary to reduce the influence of printed contents (printed matter) and to acquire texture information in an emphasized manner. Therefore, preprocessing of emphasizing the texture is performed by the following procedure.

First, the image extraction unit 51 extracts, for example, a recognition target region to be applied to authenticity determination from a recognition target image Pin as an image X.

More specifically, in a case where the recognition target image Pin is, for example, images P11 and P21 in Fig. 7, the image extraction unit 51 extracts, for example, images P12 and P22 from the images P11 and P21 in Fig. 7 as the image X including the recognition target region to be applied to authenticity determination. Note that, although Fig. 7 illustrates an example in which the vicinity of the eyes in the images P12 and P22 is extracted as the recognition target region, the present disclosure is not limited thereto, and other regions may be set as the recognition target regions.

Next, filter processing of adaptively adjusting the sharpness of the image for each region is required. Therefore, the preprocessing unit 52 obtains a smoothed image A by applying a low pass filter (LPF) to the image X by calculation according to the following Formula (1), and generates an image X' that is a difference from the image X. $\begin{matrix}X ′ = X - A \\ A = LPF \left(X\right)\end{matrix}$ (1)

Here, LPF(U) is a function of applying a smoothing filter such as a Gaussian filter to each pixel of an image U. Note that the smoothing filter may be other than the LPF, and may be, for example, contrast limited adaptive histogram equalization (CLAHE).

Next, the preprocessing unit 52 generates an image X" by normalizing each pixel of the image X' according to variations of surrounding pixels with respect to the image X' of the recognition target region for each region by calculating the following Formula (2).$X " = ADD \left(MUL\left(DIV\left(X′, s\right), C\right), D\right)$ (2)

Here, in the above formula, DIV(L, M) is a function for dividing an image L by an image M for each pixel, MUL(N, O) is a function for multiplying each pixel of an image N by a constant O, and ADD(P, Q) is a function for adding a constant Q to each pixel of an image P. Further, S is a variation in pixel values of surrounding pixels in each pixel of the image X'. Here, the variation S is calculated, for example, as in the following Formula (3). $S = SQRT \left(LPF\left(SQUARE\left(X′\right)\right)\right)$ (3)

Here, SQRT(J) is a function for calculating and outputting a square root of each pixel of an image J, LPF(K) is a function for applying a smoothing filter such as a Gaussian filter to each pixel of an image K, and SQUARE(L) is a function for calculating and outputting a square of each pixel of an image L.

That is, Formula (2) expresses normalization of the pixel value of each pixel of the image X' by the variation S (standard deviation) for each pixel of the image X' obtained by Formula (3). As a result, each pixel of the image X" has a relatively small pixel value for a pixel having a large variation S in surrounding pixels, and has a relatively large pixel value for a pixel having a small variation S in surrounding pixels.

As a result, there is less global information in the captured image X', while an image X" in which a local texture is emphasized is generated. In other words, since the variance of the surrounding pixel values is made uniform for each pixel of the image X' by the calculation using Formula (2), the sharpness of the image X" for each region becomes constant regardless of the content.

More specifically, the preprocessing unit 52 generates the images P13 and P23 at the eyes in Fig. 7 corresponding to the image X" by, for example, applying preprocessing by the calculation described with reference to the above-described Formulas (1) to (3) to the images P12 and P22 in Fig. 7 corresponding to the image X'.

In the images P13 and P23, it can be seen that information derived from the details of the content is weakened as a result of uniformizing the local sharpness of the surroundings in both a part with strong sharpness (for example, around the eyelashes) and a part with weak sharpness (for example, the lower eyelid part). On the other hand, it can be seen that the original texture is emphasized in the region where the texture exists, in the images P13 and P23.

That is, it can be seen that a texture such as a stripe pattern unique to the printed matter using the reversible thermosensitive recording medium is emphasized in the image P13, and a dotted texture unique to the printed matter using the inkjet printer is emphasized in the image P23.

### Frequency Information Extraction

In the present disclosure, in a state of determining whether printed matter is printed matter using a reversible thermosensitive recording medium, it is determined whether the printed matter has a texture unique to the printed matter using the reversible thermosensitive recording medium that "the printed matter has parallel lines arranged at equal intervals", based on an image obtained by capturing the surface of the printed matter.

For this determination, a method of quantifying the certainty of the appearance specialized for the "parallel lines arranged at equal intervals" is required. More specifically, it is necessary to distinguish the "parallel lines arranged at equal intervals", which are textures unique to the printed matter using the reversible thermosensitive recording medium, from other textures. The other textures are, for example, textures such as "dots arranged at equal intervals" observed in the printed matter using the inkjet printer.

However, by simply detecting a peak of a frequency spectrum of fast Fourier transform (FFT) as in PTL 1, it is difficult to distinguish between parallel lines and dots because peaks appear in the same manner.

Therefore, in the present disclosure, the texture including "parallel lines arranged at equal intervals" and the "dots arranged at equal intervals" texture are distinguished based on whether an angle at which a peak frequency is observed is in one direction or in a plurality of directions.

More specifically, the frequency information extraction unit 53 applies two-dimensional FFT to the image X" subjected to the above-described preprocessing, generates a power spectrum image B from a result of applying the FFT, further performs polar coordinate transformation, and outputs a frequency analysis image Y.

More specifically, the frequency information extraction unit 53 applies two-dimensional FFT to the images P13 and P23 corresponding to the preprocessed image X'', and generates images P14 and P15 corresponding to the power spectrum image B from a result of the two-dimensional FFT. Furthermore, the frequency information extraction unit 53 performs polar coordinate transformation on images P14 and P24 corresponding to the power spectrum image B and generates images P15 and P25 corresponding to the frequency analysis image Y.

Each of the images P14 and P24 to be the power spectrum image B has the minimum value of the frequency at the center position, and a spectral distribution in which the frequency becomes larger toward the outer peripheral side and the image becomes brighter as the power is larger is shown. Concentric circles indicated by dotted lines in the images P14 and P24 in Fig. 7 indicate distributions of positions having the same frequency f. In addition, in the power spectrum image B, an angle θ at which the frequency f detected with reference to the center position is detected is expressed as an angle formed with a straight line in the horizontal direction in the drawing.

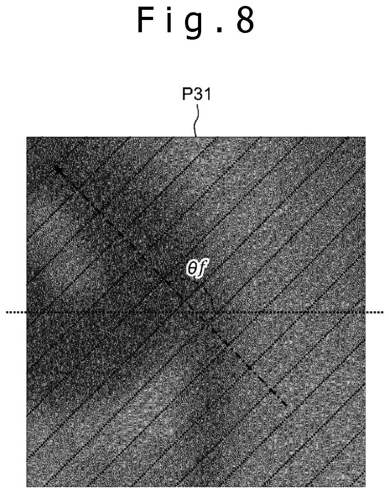

The angle θ at which the frequency f is detected is as follows. That is, for example, as illustrated in an image P31 of Fig. 8, in a case where "parallel lines arranged at equal intervals" are expressed by parallel lines rising to the right as indicated by dotted lines, and an interval between the "parallel lines arranged at equal intervals" is detected as the frequency f, the frequency f is detected with respect to an arrow direction of a one-dot chain line. Therefore, in the power spectrum image B of Fig. 8, the angle θ at which the frequency f is detected is expressed as an angle θf.

As illustrated in Fig. 8, in a case where the "parallel lines arranged at equal intervals" are obtained as the texture, the number of angles detected as the predetermined frequency f is one, but in a dot-shaped texture, various frequencies f are detected at a plurality of angles. In the present disclosure, focusing on this point, it is determined whether printing is performed using a reversible thermosensitive recording medium or printing is performed using an inkjet printer.

Further, in the images P15 and P25, the images P14 and P24 are images subjected to polar coordinate transformation, respectively.

The reason why the polar coordinate transformation is introduced is to simplify the calculation in the subsequent score calculation processing by vertically and horizontally orthogonally expressing an axis representing the frequency (or wavelength) and an axis representing the angle, as indicated by the images P15 and P25 in Fig. 7. However, since the purpose is to simplify the calculation, it does not necessarily have to be introduced. The score calculation processing will be described later in detail.

### Score Calculation

In order to apply limitation to only a portion where a unique frequency is likely to be observed in printing using a reversible thermosensitive recording medium, the score calculation unit 54 generates a frequency analysis image Y' by applying mask processing to the frequency analysis image Y, and calculates a ratio score based on the frequency analysis image Y'.

More specifically, the score calculation unit 54 masks, in the frequency analysis image Y, for example, at least one of a low frequency band of a predetermined value or less and a high frequency band of a predetermined value or more. In addition, regarding a range of the angle of 0° to 360°, symmetry is provided between a range of 0° to 179° and a range of 180° to 360°, and redundant information is obtained. Therefore, the score calculation unit 54 masks one of the range of 0° to 179° and the range of 180° to 360° and uses the other for calculation. Thus, the score calculation unit 54 uses, for example, only the range of 0° to 179° for calculation and masks the range of 180° to 360°. That is, the score calculation unit 54 generates the frequency analysis image Y' by performing masking on the frequency analysis image Y. For example, in the case of the images P15 and P25 in Fig. 7, the score calculation unit 54 generates images P16 and P26 by performing the mask processing.

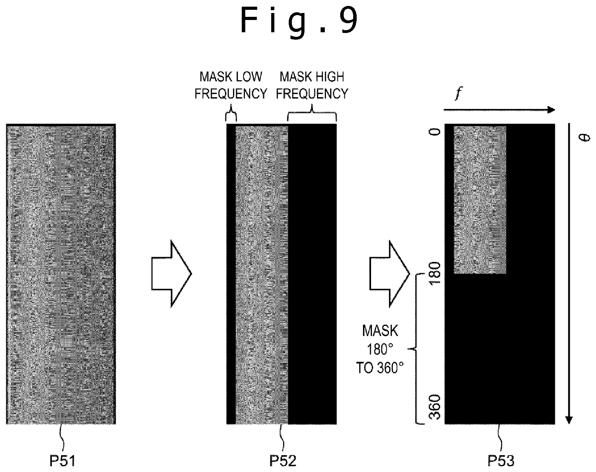

That is, for example, in a case where the image P51 in Fig. 9 is supplied as the frequency analysis image Y, the score calculation unit 54 generates the image P52 by masking the low frequency band and the high frequency band with respect to the image P51. Furthermore, the score calculation unit 54 generates the image P53 by masking the range of 180° to 360° with respect to the image P52. Note that, for the mask processing, any one of the range of 0° to 179° and the range of 180° to 360° may be masked. Therefore, the range of 0° to 179° may be masked, and the range of 180° to 360° may be used for calculation. Furthermore, since the mask processing is processing for simplifying calculation, it is not essential processing.

Then, the score calculation unit 54 obtains a principal angle θ at which the frequency f is detected by calculating the following Formula (4) using the frequency analysis image Y'.$θ = ARGMAX \left(SUMCOL\left(Y′\right)\right)$ (4)

Here, SUMCOL(G) is a function for adding a value in a column direction (frequency direction) of an image G for each row (for each angle θ) of the image G, and ARGMAX(H) is a function for calculating the maximum value of H, that is, here, the angle θ having the maximum value among the addition results of the values in the column direction (frequency direction) as the principal angle θ.

In addition, the score calculation unit 54 calculates the principal frequency f at the principal angle θ. In a method of calculating the principal frequency f at the principal angle θ, for example, the frequency f at which the power becomes the maximum value in the principal angle θ of the frequency analysis image Y' is adopted as the principal frequency f at the principal angle θ.

Further, the score calculation unit 54 calculates a ratio of the power of the principal angle θ at the principal frequency f to the sum of the powers of the entire angles of 0° to 179°, that is, a contribution ratio of the principal angle θ as a ratio score.

As a method of calculating the ratio score of the principal angle θ at the principal frequency f, for example, a ratio of the power of the principal angle θ to the sum of the power of 180 elements up to 0° to 179° at the principal frequency f of the image Y', that is, a contribution ratio of the principal angle θ is adopted.

In the case of a dot pattern observed in the inkjet printing, the ratio score calculated in the above processing is low because there are a plurality of angles at which peaks stand in the power spectrum image, and thus the contribution ratio of the principal angle is dispersed into a plurality of angles.

On the other hand, in the case of a parallel line pattern arranged at equal intervals, which is observed in printing using the reversible thermosensitive recording medium, since there is only about one angle at which a peak stands in the power spectrum image, the contribution ratio of the principal angle concentrates on one angle, and thus the ratio score becomes high.

As a result, the ratio score functions as a score that separates a texture having peaks at a plurality of angles like inkjet printed matter from a texture having only one peak like printed matter using a reversible thermosensitive recording medium.

Furthermore, by adopting the "contribution ratio of the principal angle θ at the principal frequency f", it is possible to flexibly cope with a change in the principal frequency f due to a change in capturing distance or magnification, or a change in the principal angle θ due to a change in capturing direction or angle.

As a result, it is possible to realize appropriate authenticity determination even though the capturing angle or a distance to a subject changes.

To summarize the above processing, according to the present disclosure, it is determined whether the printed matter is printed matter using a reversible thermosensitive recording medium by determining "whether the printed matter has characteristics (that the angle at which the principal frequency appears is in the single direction) unique to the printed matter using the reversible thermosensitive recording medium, in a state where "a detailed texture is captured at a predetermined magnification or higher", and the influence of printing contents (low frequency information) is reduced by adaptive filter processing, and texture information (high frequency information) is extracted.

That is, according to the above method, it is possible to appropriately determine whether the printed matter is the printed matter using the reversible thermosensitive recording medium only with the image obtained by capturing the card face.

Furthermore, since, by the adaptive filter processing, the influence of the printing contents (low frequency information) is reduced and the texture information (high frequency information) is emphasized, it is possible to realize highly accurate and stable authenticity determination even though any content is printed without limiting the printing content as in the concentric colored pattern.

Furthermore, since the ratio score that is the "contribution ratio of the principal angle θ at the principal frequency f" related to the authenticity determination is less likely to depend on an appearance angle and scale of the parallel lines, it is possible to realize stable authenticity determination without being affected by changes in the capturing angle and the distance to the subject.

### Authenticity Determination Processing

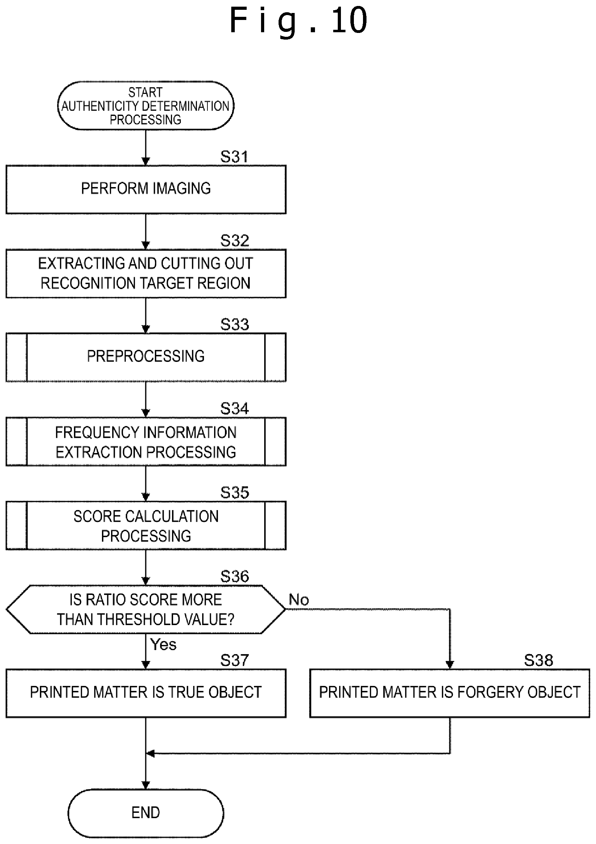

Next, authenticity determination processing of the printed matter of a card face by the information processing apparatus 31 of Fig. 6 will be described with reference to the flowchart of Fig. 10.

In Step S31, the camera 50 captures printed matter such as a card face as a target of authenticity determination, and supplies the captured image Pin to the control unit 41.

In Step S32, the image extraction unit 51 extracts a recognition target region to be applied to authenticity determination from the recognition target image Pin as an image X and cuts out the image X.

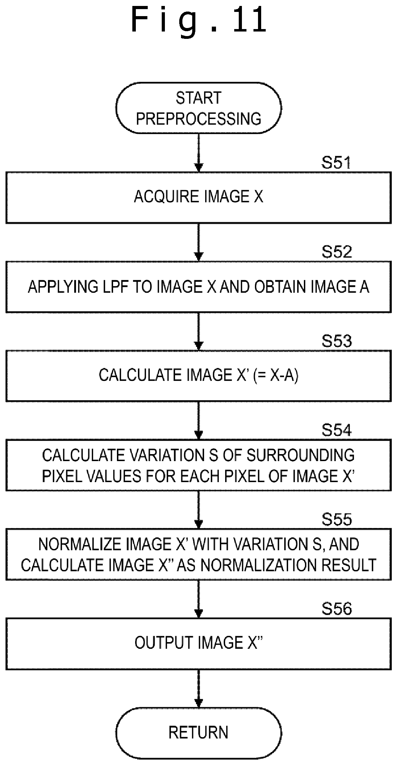

In Step S33, the preprocessing unit 52 generates an image X" in which texture is emphasized, by performing preprocessing on the image X, and supplies the image X" to the frequency information extraction unit 53. Note that details of the preprocessing will be described later with reference to the flowchart of Fig. 11.

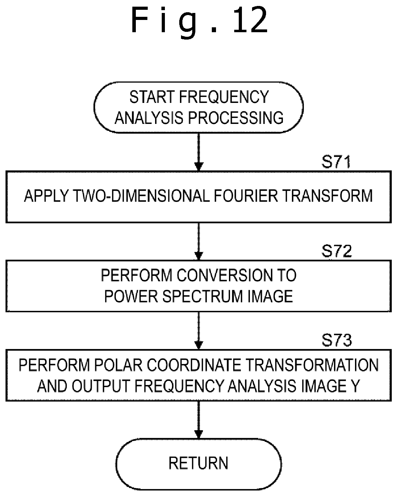

In Step S34, the frequency information extraction unit 53 generates a frequency analysis image Y by performing frequency information extraction processing on the image X'', and supplies the frequency analysis image Y to the score calculation unit 54. Note that the frequency information analyzing processing will be described later in detail with reference to the flowchart of Fig. 12.

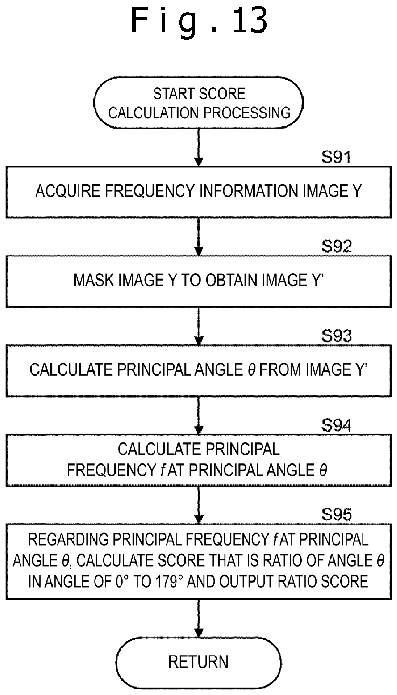

In Step S35, the score calculation unit 54 executes the score calculation processing based on the frequency analysis image Y, thereby calculating the ratio score described above and outputting the ratio score to the authenticity determination unit 55. Note that the score calculation processing will be described later in detail with reference to the flowchart of Fig. 13.

In Step S36, the authenticity determination unit 55 determines whether the ratio score is higher than a predetermined threshold value.

In a case where it is determined in Step S36 that the ratio score is higher than the predetermined threshold value, the processing proceeds to Step S37.

In Step S37, the authenticity determination unit 55 determines that the printed matter captured by the camera 50 is a true object printed by using the reversible thermosensitive recording medium.

In addition, in a case where it is determined in Step S36 that the ratio score is not higher than the predetermined threshold value, the processing proceeds to Step S38.

In Step S38, the authenticity determination unit 55 determines that the printed matter captured by the camera 50 is not printed by using the reversible thermosensitive recording medium, but is a forgery object.

Simply by the camera 50 capturing the printed matter as an authenticity determination target through the above processing and using the captured image, it is possible to appropriately perform authenticity determination as to whether the printed matter is a true object printed by using the reversible thermosensitive recording medium.

### Preprocessing

Next, preprocessing by the preprocessing unit 52 will be described with reference to a flowchart in Fig. 11.

In Step S51, the preprocessing unit 52 acquires the image X.

In Step S52, the preprocessing unit 52 generates an image A smoothed by processing of applying an LPF to each pixel of the image X as adaptive filter processing.

In Step S53, the preprocessing unit 52 generates an image X' (= X-A) by subtracting the image A from the image X by calculation using the above-described Formula (1).

In Step S54, the preprocessing unit 52 calculates a variation S that is the standard deviation of pixel values of the surrounding pixels in each pixel of the image X' by the calculation using the above-described Formula (3).

In Step S55, the preprocessing unit 52 normalizes the image X' with the variation S by calculation using the above-described Formula (2), and calculates a normalization result as an image X" in which texture is emphasized.

In Step S56, the preprocessing unit 52 outputs the image X" in which the generated texture is emphasized to the frequency information extraction unit 53.

By the above processing, the image X as a target of authenticity determination is smoothed to generate the image A, the image A is subtracted from the image X that is the original image to generate the image X', and the image X' is normalized by the variation S for each pixel to generate the image X" in which the texture is emphasized.

More specifically, by the above processing, for example, as described with reference to Fig. 7, preprocessing is performed on the images P12 and P22 corresponding to the image X as the target of authenticity determination, whereby the images P13 and P23 corresponding to the image X" are generated. As a result, it is possible to apply preprocessing to obtain an image in which texture is emphasized in a state where the influence of the content as an capturing target is reduced.

### Frequency Analysis Processing

Next, frequency analysis processing will be described with reference to the flowchart of Fig. 12.

In Step S71, the frequency information extraction unit 53 applies two-dimensional FFT to the image X''.

In Step S72, the frequency information extraction unit 53 converts a result of the two-dimensional FFT on the image X" into a power spectrum image B.

In Step S73, the frequency information extraction unit 53 performs polar coordinate transformation on the power spectrum image B, generates a frequency analysis image Y, and outputs the frequency analysis image Y to the score calculation unit 54.

By the above processing, for example, as described with reference to Fig. 7, the two-dimensional FFT is applied to the images P13 and P23 corresponding to the image X'', and a result of applying the two-dimensional FFT is converted into the power spectrum image B such as the images P14 and P24 in Fig. 7. Then, the power spectrum image B is subjected to polar coordinate transformation, thereby generating the frequency analysis image Y such as images P15 and P25.

### Score Calculation Processing

Next, score calculation processing will be described with reference to the flowchart of Fig. 13.

In Step S91, the score calculation unit 54 acquires the frequency analysis image Y.

In Step S92, the score calculation unit 54 generates a frequency analysis image Y' by performing the mask processing as described with reference to Fig. 9 on the frequency analysis image Y.

In Step S93, the score calculation unit 54 calculates the principal angle θ based on the frequency analysis image Y' by the operation as in the above-described Formula (4).

In Step S94, the score calculation unit 54 calculates the frequency f having the maximum value among the principal angles θ of the frequency analysis image Y' as the principal frequency f at the principal angle θ.

In Step S95, the score calculation unit 54 calculates a ratio of power at the principal angle θ to the sum of powers at the angle 0° to 179° as the ratio score for the principal frequency f at the principal angle θ.

By the above processing, based on the frequency analysis image Y', in the power spectrum image, only a direction in which the "parallel lines arranged at equal intervals", which is the texture unique to the printed matter using the reversible thermosensitive recording medium, are arranged, that is, only one principal angle θ is detected, and thus the ratio score is not dispersed by the other angles θ.

On the other hand, in the case of printed matter other than the printed matter using the reversible thermosensitive recording medium, for example, when there are a plurality of angles corresponding to the principal angle θ, such as a dot-like texture, the ratio score is reduced by being dispersed by other angles.

As a result, when the ratio score is higher than the predetermined value, it can be regarded that the "parallel lines arranged at equal intervals", which is a texture unique to the printed matter using the reversible thermosensitive recording medium, have been detected, and thus it is possible to determine that the printed matter is the printed matter using the reversible thermosensitive recording medium.

### 3. First Application Example

In the above description, an example has been described in which the information processing apparatus 31 executes all the types of processing of capturing printed matter to determining the authenticity of the captured printed matter on the premise that the information processing apparatus 31 is a smartphone, a tablet terminal, or the like. That is, in the above description, an example in which the user himself/herself who holds a smartphone or a tablet terminal determines the authenticity of an ID card or the like and confirms the identity of the person who holds the ID card has been described above.

However, the present disclosure may be applied to personal identification work in a face-to-face manner using information such as characters and photographs printed on a reversible thermosensitive recording medium. That is, in a case where an inspector visually checks information such as characters and photographs printed on an ID card or the like formed by a reversible thermosensitive recording medium or the like, thereby performing personal identification in a face-to-face manner, a camera may be installed at an inspection site, a card face of the ID card may be captured, the above-described technique of the present disclosure may be applied. In this manner, processing of determining the authenticity of the ID card and assisting the personal identification by the inspector may be realized.

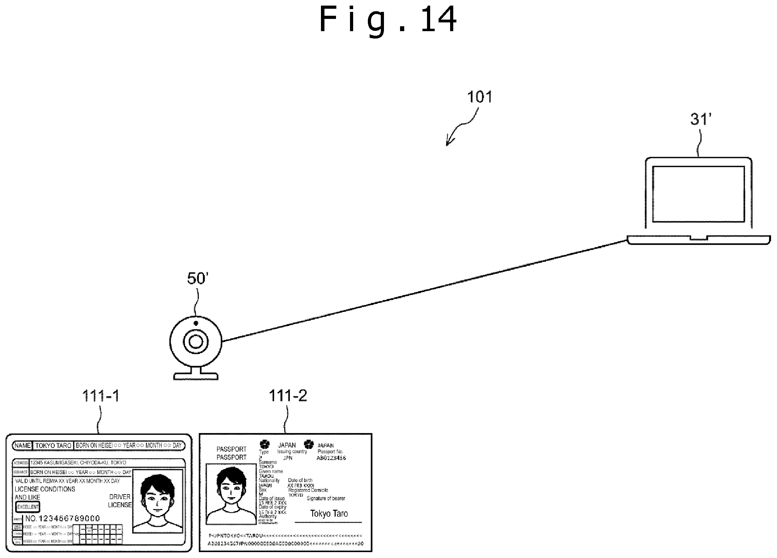

Fig. 14 illustrates a configuration example of an information processing system configured to assist an inspector by determining authenticity of an ID card by applying the technique of the present disclosure and presenting a determination result, in a case where the inspector performs personal identification based on information such as characters and photographs printed on the presented ID card or the like.

An information processing system 101 in Fig. 14 includes an information processing apparatus 31' and a camera 50'.

The basic function of the information processing apparatus 31' is the same as that of the information processing apparatus 31, and the camera 50' is further connected as a separate member. Note that, since the camera 50' is connected as a separate member, the camera 50 is not essential in the information processing apparatus 31'.

The camera 50' has the same basic function as the camera 50, is provided separately from the information processing apparatus 31', and is used when the inspector performs personal identification in a face-to-face manner. That is, for example, the inspector causes an image to be captured by holding an ID card presented by a subject who is subjected to personal identification over the camera 50', and supplies the captured image to the information processing apparatus 31'. Note that, in Fig. 14, an example of a vehicle license 111-1 and a passport 111-2 is illustrated as an example of the ID card, but other ID cards may be used as long as the true object is printed matter using a reversible thermosensitive recording medium.

With such a configuration, the information processing apparatus 31' can assist the inspector by presenting the determination result to the inspector by the above-described authenticity determination processing based on the image obtained by capturing the card face of the ID card or the like captured by the camera 50'.

As the information to be presented to the inspector, only the authenticity determination result may be presented. For example, an image captured by the camera 50' may be presented together, or another intermediate image described with reference to Fig. 7 may be presented.

Furthermore, a general smartphone or tablet terminal may be used instead of the camera 50', and the card face of the ID card may be captured by using only each camera function, and the captured image may be supplied to the information processing apparatus 31'.

### 4. Second Application Example

In the above description, an example has been described in which the present disclosure is applied to personal identification work in a face-to-face manner using information such as characters and photographs printed on a reversible thermosensitive recording medium.

However, the present disclosure may be applied to personal identification work via a network. That is, when an image obtained by capturing a card face of a character, a photograph, or the like printed on an ID card or the like including a reversible thermosensitive recording medium or the like presented via a network is presented, the authenticity of the ID card may be determined by applying the technique of the present disclosure described above based on the presented image, thereby realizing online personal identification.

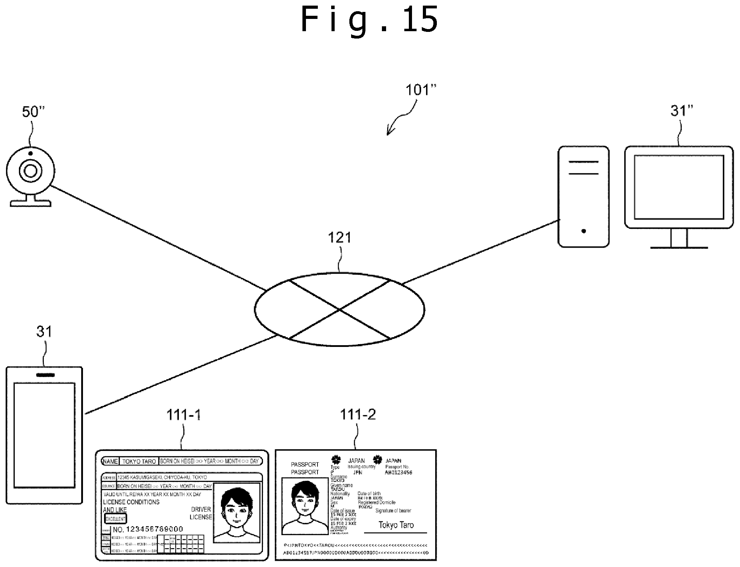

Fig. 15 illustrates a configuration example of an information processing system configured to determine authenticity of an ID card by applying the above-described technique of the present disclosure based on a presented image when information obtained by capturing a card face such as characters or photographs printed on the ID card or the like including a reversible thermosensitive recording medium or the like presented via a network is presented.

An information processing system 101" in Fig. 15 includes an information processing apparatus 31'', a camera 50'', and an information processing apparatus 31.

The camera 50'' basically has the same function as the cameras 50 and 50', and has the same function of capturing a card face of an ID card or the like, but further transmits the captured image of the card face to the information processing apparatus 31'' via a network 121.

Furthermore, here, the information processing apparatus 31 captures the card face of the ID card or the like without performing authenticity determination, and transmits the captured image to the information processing apparatus 31'' via the network 121.

The information processing apparatus 31'' includes a cloud server, a network server, or the like, and has the same basic function as the information processing apparatus 31, but receives an image obtained by capturing a card face of an ID card or the like as a determination target from the camera 50'' or the information processing apparatus 31 via the network 121, executes the above-described authenticity determination processing, and then executes personal identification.

Note that, in the information processing system 101'' in Fig. 15, since the information processing apparatus 31 can image the card face of the ID card or the like as the determination target and perform execution up to the authenticity determination processing based on the captured image, only the authenticity determination result from the information processing apparatus 31 may be transmitted to the information processing apparatus 31'' via the network 121. At this time, the information processing apparatus 31'' may acquire only the authenticity determination result from the information processing apparatus 31, and realize personal identification.

Furthermore, the information processing apparatus 31 may transmit the intermediate image described with reference to Fig. 7 together with the captured image, for example, instead of transmitting the authenticity determination result to the information processing apparatus 31", and the information processing apparatus 31'' may execute the authenticity determination processing by using the intermediate image.

### First Modification Example (Use of Camera Information)

The authenticity determination processing may be performed by matching the angle of view of the camera used for capturing with focus information together with the captured image. For example, an capturing range may be calculated from an angle of view of a camera used for capturing and focus information, and in a case where a difference from a previously-assumed capturing range is more than a predetermined value, a ratio score determined in an image may be adjusted to be low.

For example, in a case where capturing is actually performed at a 500 m square despite an assumption that capturing is performed at about 20 to 100 mm square, there is a possibility that large-scale printed matter obtained by printing a stripe pattern similar to printing using a reversible thermosensitive recording medium may be falsified, and thus the ratio score is adjusted to be low in consideration of the possibility of falsification.

By introducing this processing, it is possible to prevent falsification using large-scale printed matter obtained by printing a stripe pattern similar to printing using a reversible thermosensitive recording medium.

### Second Modification Example (Regarding Recognition Target Region)

In the present specification, an eye surrounding region has been described as an example of the recognition target region, but the recognition target region is not limited to the eye. For example, a separate part of the face such as the nose or the mouth may be used, or even the eye may not be used in the surroundings, and only the iris region may be used in a more limited manner. Furthermore, instead of the face, a character, a logo mark, a QR code (registered trademark), and the like may be detected, and authenticity determination may be performed using the region.

By setting various recognition target regions as described above, when the face photograph of the ID card is recognized, it is possible to improve the determination accuracy by performing redetermination with another part or performing determination with a plurality of parts when the authenticity determination with eyes has failed.

### Third Modification Example (Regarding Use of Plurality of Types of Adaptive Filter Processing)

The processing performed by the preprocessing unit 52 in Fig. 2 may use a plurality of types of adaptive filter processing, and a final ratio score may be calculated by combining (averaging, maximizing, or the like) a plurality of ratio scores obtained by performing subsequent processing on each output.

The plurality of types of adaptive filter processing mean, for example, use of LPFs of different kernel sizes and use of adaptive contrast adjustment processing such as CLAHE together with the processing of the preprocessing unit 52.

In a case where N types of adaptive filter processing are used, N ratio scores are calculated, and as the final ratio score, the N maximum values, average values, minimum values, or the like are used and aggregated into one ratio score.

In addition, the processing of calculating the ratio score may not be aggregated into one, and after the determination processing based on comparison with a predetermined threshold value, N authenticity determination results may be obtained, and then the results may be aggregated into one authenticity determination result by a majority of the N results.

By using a plurality of types of adaptive filter processing as described above, it is possible to improve robustness against details of contents and a change in scale of an image.

### Fourth Modification Example (Regarding Use of Plurality of Image Channels)

In the processing performed by the preprocessing unit 52, adaptive filter processing may be applied to each of a plurality of image channels, and the final score may be calculated by combining (averaging, maximizing, or the like) a plurality of determination scores obtained by performing subsequent processing on each output.

As the plurality of image channels, three types of an R channel, a G channel, and a B channel are conceivable in the case of an RGB color image. In a case where M types of adaptive filter processing are used, M ratio scores are calculated, and the final ratio score is aggregated into one ratio score by using the maximum value, the average value, the minimum value, and the like of the M ratio scores.

In addition, M pieces of data up to the authenticity determination result after the determination based on the comparison between the ratio score and the predetermined threshold value may be calculated without being aggregated into one in the score calculation processing, and then, may be aggregated into one authenticity determination result by a majority of the M authenticity determination results.

By integrating the determination results in the plurality of channels as described above, a more stable determination result can be obtained.

However, instead of independently performing processing on a plurality of channels of an R channel, a G channel, and a B channel with respect to an input of an RGB image, RGB may be converted into grayscale in advance, aggregated into one channel, and then applied to subsequent processing.

### Fifth Modification Example (Regarding Use of Images Acquired at Plurality of Times)

In the processing performed by the preprocessing unit 52, adaptive filter processing may be applied to each of a plurality of images acquired at a plurality of times, and a plurality of ratio scores obtained by performing the subsequent processing may be summed (averaged, maximized, or the like) based on each output to calculate the final ratio score. Examples of the images acquired at a plurality of times include a moving image obtained by imaging in time series. By integrating the authenticity determination results based on the capturing results at a plurality of times as described above, a more stable authenticity determination result can be obtained.

### Sixth Modification Example (Regarding Use of DNN)

Some or all types of the processing of the preprocessing unit 52, the frequency information extraction unit 53, and the score calculation unit 54 may be performed by a deep neural network (DNN). For example, a machine-learned DNN may be used as a task of determining whether an input image is an image of printed matter using a reversible thermosensitive recording medium, and the authenticity determination processing may be performed by comparing an output score of the DNN with a predetermined threshold value instead of the ratio score.

### Seventh Modification Example (Regarding Feedback of Result)

The output of the result may be fed back with not only the ratio score and the authenticity determination result but also error information obtained in the process.

For example, in the processing of extracting and cutting out the recognition target region, in a case where an eye region is targeted and the eye region is not detected, the subsequent processing may not be executed and an error message indicating that "the recognition target region (eye region) is not detected" may be displayed.

Further, for example, as a result of the frequency information extraction, in a case where the value of the power spectrum of frequency information is lower than a predetermined value, an error message such as "the image may be out of focus" may be displayed.

With these feedbacks, it is possible to reduce a case where the authenticity determination is not correctly performed due to an operation error of the user, and to shorten a time until the user can correctly perform the authenticity determination.

### Eighth Modification Example (Regarding Application Target)

Since the present disclosure is a technique for determining whether a texture of a target object is predefined printed matter, the present disclosure can also be applied to the authenticity determination of a trading card, a medicine package, or the like on which printed matter using a reversible thermosensitive recording medium is printed, in addition to the authenticity determination of the ID card and the passport described above.

As a result, it is possible to confirm that the trading card is not fraudulently counterfeited, and to confirm the illegally created medicine by verifying that the package is a true object, and it is possible to prevent distribution of the fraudulent trading card and the fraudulent medicine.

### 5. Example of Execution Using Software

Incidentally, the above-described series of processing can be executed by hardware, and can also be executed by software. In a case where the series of processing is executed by software, programs that configure the software are installed from a recording medium into a computer built into dedicated hardware, or into, for example, a general-purpose computer that can execute various functions by installing various programs.

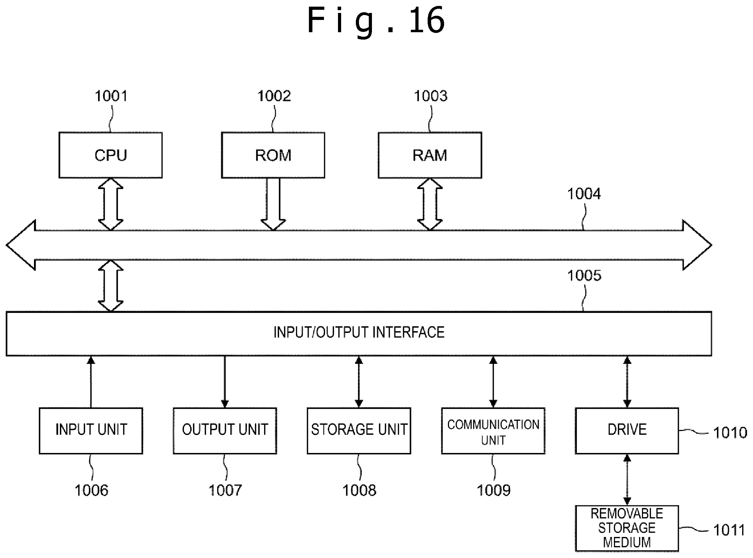

Fig. 16 illustrates a configuration example of a general-purpose computer. The computer has a built-in central processing unit (CPU) 1001. An input/output interface 1005 is connected to the CPU 1001 via a bus 1004. A read only memory (ROM) 1002 and a random access memory (RAM) 1003 are connected to the bus 1004.

An input unit 1006 configured with input devices such as a keyboard and a mouse through which a user inputs operation commands, an output unit 1007 which outputs a processing operation screen and an image of a processing result to a display device, a storage unit 1008 configured with a hard disk drive or the like for storing programs and various pieces of data, and a communication unit 1009, configured with a local area network (LAN) adapter or the like, for executing a communication processing via a network represented by the Internet are connected to an input/output interface 1005. In addition, a drive 1010 for reading and writing data from and to a removable storage medium 1011 such as a magnetic disk (including a flexible disk), an optical disk (including a compact disc-read only memory (CD-ROM), and a digital versatile disc (DVD), a magneto-optical disk (including a mini disc (MD)), or a semiconductor memory is connected.

The CPU 1001 executes various types of processing in accordance with a programs stored in the ROM 1002 or a program that is read out from the removable storage medium 1011, such as a magnetic disk, an optical disk, a magneto-optical disk, or a semiconductor memory, installed in the storage unit 1008, and loaded into the RAM 1003 from the storage unit 1008. The RAM 1003 also appropriately stores data necessary for the CPU 1001 to execute various types of processing.

In the computer configured as described above, the CPU 1001 loads the program stored in the storage unit 1008, for example, into the RAM 1003 via the input/output interface 1005 and the bus 1004, and executes the program, thereby performing the above-described series of processing.

The program executed by the computer (CPU 1001) can be recorded, for example, on the removable storage medium 1011 which is a package medium or the like, and provided. The program can also be provided via a wired or wireless transmission medium, such as a local area network, the Internet, or digital satellite broadcasting.

In the computer, the program can be installed in the storage unit 1008 via the input/output interface 1005 by inserting the removable storage medium 1011 into the drive 1010. Further, the program can be received by the communication unit 1009 via the wired or wireless transmission medium and installed in the storage unit 1008. In addition, the program can be pre-installed in the ROM 1002 or the storage unit 1008.

Note that the program executed by the computer may be a program in which processing is performed in time series in the order described in the present specification, or may be a program in which processing is performed in parallel or at a necessary timing such as when a call is performed.

Note that the CPU 1001 in Fig. 16 implements the function of the control unit 41 of Fig. 6.

Note that in the present specification, a system means a set of a plurality of components (devices, modules (parts), and the like), and it does not matter whether all the components are in the same housing. Therefore, the system refers to both a plurality of devices housed in separate housings and connected via a network, and one device in which a plurality of modules are housed in one housing.

Furthermore, embodiments of the present disclosure are not limited to the above-described embodiments, and various modifications can be made without departing from the scope of the present disclosure.

For example, the present disclosure can adopt a configuration of cloud computing in which a single function is shared and processed jointly by a plurality of devices via a network.

Further, each step described in the above-described flowchart can be performed by one device or can be shared and executed by a plurality of devices.

Further, when a single step includes multiple processes, the multiple processes included in that single step can be executed by a single device, or can be shared and executed by a plurality of devices.

The present disclosure may also be configured as follows.
<1> A program for causing a computer to function as:
   an image processing unit that extracts texture information from a captured image of a surface of printed matter captured at a predetermined resolution or higher; and
   a determination unit that determines whether the printed matter is printed by a predetermined printing method, based on the texture information.
<2> The program according to <1>, in which
   the predetermined printing method is a printing method using a reversible thermosensitive recording medium.
<3> The program according to <1>, in which
   the image processing unit extracts the texture information by applying adaptive filter processing for each region to the captured image and subtracting from the captured image.
<4> The program according to <3>, in which
   the image processing unit extracts the texture information by applying the adaptive filter processing for each of the regions to the captured image, subtracting from the captured image, and further performing normalization for each pixel by using variation of surrounding pixels.
<5> The program according to <1>, further including:
   a frequency analysis unit that performs frequency analysis of the texture information, in which
   the determination unit determines whether the printed matter is printed by the predetermined printing method, based on a frequency analysis result from the frequency analysis unit.
<6> The program according to <5>, in which
   the frequency analysis unit performs a frequency analysis, by applying two-dimensional Fourier transform to the texture information, and converting a two-dimensional Fourier transform result of the texture information into a power spectrum image including a distribution of power expressed by a frequency and an angle at which the frequency is detected.
<7> The program according to <6>, in which
   the frequency analysis unit outputs, as a frequency analysis result, an image obtained by performing polar coordinate transformation on the power spectrum image.
<8> The program according to <7>, in which
   the image obtained by performing the polar coordinate transformation on the power spectrum image is an image in which an axis of the frequency in the two- dimensional Fourier transform result of the texture information is orthogonal to an axis of the angle.
<9> The program according to <8>, further including:
   a score calculation unit that calculates a score expressing that the printed matter is printed by the predetermined printing method, based on the frequency analysis result, in which
   the determination unit determines whether the printed matter is printed by the predetermined printing method, based on the score.
<10> The program according to <9>, in which
   the score calculation unit:
   masks, in the image that is obtained by performing the polar coordinate transformation on the power spectrum image and is the frequency analysis result, a frequency band higher than a predetermined value and a frequency band lower than a predetermined value with respect to the frequency, and a range of 180° to 360° with respect to the angle; and
   calculates the score based on the image, after masking, obtained by performing the polar coordinate transformation on the power spectrum image.
<11> The program according to <10>, in which
   the score calculation unit:
   calculates, as a principal angle, an angle at which a sum of power at all of the frequencies is maximized for each of the angles in the image that is obtained by performing the polar coordinate transformation on the power spectrum image and is the frequency analysis result; and
   calculates the score at the principal angle.
<12> The program according to <10>, in which
   the score calculation unit:
   calculates, as a principal frequency, a frequency at which the power becomes maximum at the principal angle in the image that is obtained by performing polar coordinate transformation on the power spectrum image and is the frequency analysis result; and
   calculates, as the score, a ratio of the power at the principal angle to a sum of power at all angles in the principal frequency at the principal angle.
<13> The program according to <6>, in which
   in a case where a power spectrum in the power spectrum image is lower than a predetermined value, the frequency analysis unit indicates that the captured image may be out of focus when being captured.
<14> The program according to <1>, further including:
   an image extraction unit that extracts a recognition target region from the captured image, in which
   the image processing unit extracts the texture information from the recognition target region extracted from the captured image.
<15> The program according to <14>, in which
   the recognition target region is a part of a living organism included in the printed matter.
<16> The program according to <1>, in which
   the predetermined resolution is 10 pixels/mm or more.
<17> An information processing method including:
   image processing of extracting texture information from a captured image of a surface of printed matter captured at a predetermined resolution or higher; and
   determination processing of determining whether the printed matter is printed by a predetermined printing method based on the texture information.
<18> The information processing method according to <17>, further including:
   frequency analysis processing of performing a frequency analysis, by applying two-dimensional Fourier transform to the texture information, and converting a two-dimensional Fourier transform result of the texture information into a power spectrum image including a distribution of power expressed by a frequency and an angle at which the frequency is detected, in which
   the determination processing determines whether the printed matter is printed by the predetermined printing method, based on a power spectrum image that is a frequency analysis result of the frequency analysis processing.
<19> The information processing method according to <18>, in which
   in a case where a power spectrum in the power spectrum image is too low, the frequency analysis processing indicates that the captured image may be out of focus when being captured.
<20> An information processing system including:
   an image processing unit that extracts texture information from a captured image of a surface of printed matter captured at a predetermined resolution or higher; and
   a determination unit that determines whether the printed matter is printed by a predetermined printing method, based on the texture information.

### Reference Signs List

31,31', 31'' information processing apparatus, 50,50', 50'' camera, 51 image extraction unit, 52 preprocessing unit, 53 frequency information extraction unit, 54 score calculation unit, 55 authenticity determination unit, 101,101'' information processing system

## Claims

1. A program for causing a computer to function as:
an image processing unit that extracts texture information from a captured image of a surface of printed matter captured at a predetermined resolution or higher; and
a determination unit that determines whether the printed matter is printed by a predetermined printing method, based on the texture information.

2. The program according to claim 1, wherein
the predetermined printing method is a printing method using a reversible thermosensitive recording medium.

3. The program according to claim 1, wherein
the image processing unit extracts the texture information by applying adaptive filter processing for each region to the captured image and subtracting from the captured image.

4. The program according to claim 3, wherein
the image processing unit extracts the texture information by applying the adaptive filter processing for each of the regions to the captured image, subtracting from the captured image, and further performing normalization for each pixel by using variation of surrounding pixels.

5. The program according to claim 1, further comprising:
a frequency analysis unit that performs frequency analysis of the texture information, wherein
the determination unit determines whether the printed matter is printed by the predetermined printing method, based on a frequency analysis result from the frequency analysis unit.

6. The program according to claim 5, wherein
the frequency analysis unit performs a frequency analysis, by applying two-dimensional Fourier transform to the texture information, and converting a two-dimensional Fourier transform result of the texture information into a power spectrum image including a distribution of power expressed by a frequency and an angle at which the frequency is detected.

7. The program according to claim 6, wherein
the frequency analysis unit outputs, as a frequency analysis result, an image obtained by performing polar coordinate transformation on the power spectrum image.

8. The program according to claim 7, wherein
the image obtained by performing the polar coordinate transformation on the power spectrum image is an image in which an axis of the frequency in the two-dimensional Fourier transform result of the texture information is orthogonal to an axis of the angle.

9. The program according to claim 8, further comprising:
a score calculation unit that calculates a score expressing that the printed matter is printed by the predetermined printing method, based on the frequency analysis result, wherein
the determination unit determines whether the printed matter is printed by the predetermined printing method, based on the score.

10. The program according to claim 9, wherein
the score calculation unit:
masks, in the image that is obtained by performing the polar coordinate transformation on the power spectrum image and is the frequency analysis result, a frequency band higher than a predetermined value and a frequency band lower than a predetermined value with respect to the frequency, and a range of 180° to 360° with respect to the angle; and
calculates the score based on the image, after masking, obtained by performing the polar coordinate transformation on the power spectrum image.

11. The program according to claim 10, wherein
the score calculation unit:
calculates, as a principal angle, an angle at which a sum of power at all of the frequencies is maximized for each of the angles in the image that is obtained by performing the polar coordinate transformation on the power spectrum image and is the frequency analysis result; and
calculates the score at the principal angle.

12. The program according to claim 10, wherein
the score calculation unit:
calculates, as a principal frequency, a frequency at which the power becomes maximum at the principal angle in the image that is obtained by performing polar coordinate transformation on the power spectrum image and is the frequency analysis result; and
calculates, as the score, a ratio of the power at the principal angle to a sum of power at all angles in the principal frequency at the principal angle.

13. The program according to claim 6, wherein
in a case where a power spectrum in the power spectrum image is lower than a predetermined value, the frequency analysis unit indicates that the captured image may be out of focus when being captured.

14. The program according to claim 1, further comprising:
an image extraction unit that extracts a recognition target region from the captured image, wherein
the image processing unit extracts the texture information from the recognition target region extracted from the captured image.

15. The program according to claim 14, wherein
the recognition target region is a part of a living organism included in the printed matter.

16. The program according to claim 1, wherein
the predetermined resolution is 10 pixels/mm or more.

17. An information processing method comprising:
image processing of extracting texture information from a captured image of a surface of printed matter captured at a predetermined resolution or higher; and
determination processing of determining whether the printed matter is printed by a predetermined printing method based on the texture information.

18. The information processing method according to claim 17, further comprising:
frequency analysis processing of performing a frequency analysis, by applying two-dimensional Fourier transform to the texture information, and converting a two-dimensional Fourier transform result of the texture information into a power spectrum image including a distribution of power expressed by a frequency and an angle at which the frequency is detected, wherein
the determination processing determines whether the printed matter is printed by the predetermined printing method, based on a power spectrum image that is a frequency analysis result of the frequency analysis processing.

19. The information processing method according to claim 18, wherein
in a case where a power spectrum in the power spectrum image is too low, the frequency analysis processing indicates that the captured image may be out of focus when being captured.

20. An information processing system comprising:
an image processing unit that extracts texture information from a captured image of a surface of printed matter captured at a predetermined resolution or higher; and
a determination unit that determines whether the printed matter is printed by a predetermined printing method, based on the texture information.
